# EUROPÄISCHE PATENTSCHRIFT

(11) **EP 2 656 017 B1**
(45) Veröffentlichungstag und Bekanntmachung des Hinweises auf die Patenterteilung: **16.09.2020**
(21) Anmeldenummer: 11788133.4
(22) Anmeldetag: 23.11.2011
(51) Int. Cl.: G01F 1/66

(54) **KOPPELELEMENT EINES ULTRASCHALLWANDLERS FÜR EIN ULTRASCHALL-DURCHFLUSSMESSGERÄT**
COUPLING ELEMENT OF AN ULTRASONIC TRANSDUCER FOR AN ULTRASONIC FLOW METER
ÉLÉMENT DE COUPLAGE D'UN TRANSDUCTEUR ULTRASONIQUE POUR UN DÉBITMÈTRE À ULTRASONS

(30) Priorität: 20.12.2010 DE 102010063535
(43) Veröffentlichungstag der Anmeldung: 30.10.2013
(73) Patentinhaber: Endress+Hauser Flowtec AG, 4153 Reinach (CH)
(72) Erfinder: KISSLING, Beat, CH-4153 Reinach (CH); MÜLLER, Quirin, CH-4132 Muttenz (CH)
(74) Vertreter: Andres, Angelika Maria
(86) Internationale Anmeldenummer: PCT/EP2011/070844
(87) Internationale Veröffentlichungsnummer: WO 2012/084391

(56) Entgegenhaltungen:
- EP-A2- 1 094 305
- WO-A1-2005/012897
- DE-B- 1 150 213
- US-A- 5 467 321

## Beschreibung

Die vorliegende Erfindung betrifft einen Ultraschallwandler für ein Ultraschall-Durchflussmessgerät, geeignet zur Modenkonversion einer akustischen Longitudinalwelle zwischen einer Einkoppelfläche und einer Auskoppelfläche des Koppelelements durch Reflexion an einer ersten Grenzfläche des Koppelelements zu einem vorgegebenen Medium.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip. Beim Laufzeitdifferenz-Prinzip werden die unterschiedlichen Laufzeiten von Ultraschallimpulsen relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen. Reflexionen in der Flüssigkeit treten auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-on-Ultraschall-Durchflussmesssysteme erhältlich. Bei diesen Systemen werden die

Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden.

Ein weiteres Ultraschall-Durchflussmessgerät, das nach dem Laufzeitdifferenz-Prinzip arbeitet, ist aus der US-A 50 52 230 bekannt. Die Laufzeit wird hier mittels kurzen Ultraschallimpulsen, so genannten Bursts, ermittelt.

Die DE 1 150 213 B1 offenbart in Fig. 5 einen Koppelkörper mit einer Grenzfläche 20 und einer Auskoppelfläche 17 oder 18. Zudem wird eine in Längsrichtung eine ausgedehnte Abflachung beschrieben. Sie steht aus der inneren Wandung des Messrohres hervor. Die Abflachungen können an den Enden des Kuppelblocks abgerundet sein.

Die US 5,467,321 A1 offenbart in Fig. 4A einen Koppelkörper mit einer ersten Grenzfläche, einer zweiten Grenzfläche und einer Auskoppelfläche.

Die WO2005/012897 A1 offenbart einen Koppelkörper zur Viskositätsmessung von Flüssigkeiten. Durch der Einkoppelfläche 16 wird eine Longitudinalwelle Lg eingeleitet. Diese wird anschließend an der Reflexionsfläche 18 teilweise als Longitudinalwelle Lr reflektiert und teilweise in eine Transversalwelle SVmc umgewandelt bzw. reflektiert. Die Transversalwelle wird zur Fläche 20 dem "sampling face" weitergeleitet, wo eine Totalreflektion erfolgt.

Die Ultraschallwandler bestehen normalerweise aus einem elektromechanischen Wandlerelement, z.B. ein piezoelektrisches Element, und einer Koppelschicht, oder auch Koppelelement genannt, insbesondere bei Clamp-On-Systemen. Im elektromechanischen Wandlerelement werden die Ultraschallwellen erzeugt und über das Koppelelement zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt.

Zwischen dem piezoelektrischen Element und dem Koppelelement kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

Um störende Reflexionen des Ultraschallsignals innerhalb des Koppelelements zu minimieren, schlägt beispielsweise die DE 10 2007 062 913 A1 einen schallabsorbierenden Bereich vor.

Die US 4,467,659 offenbart ein Koppelelement eines Ultraschallwandlers eines Durchflussmessgeräts. Das Koppelelement weist eine Einkoppelfläche auf, auf welcher ein piezoelektrischer Ultraschallwandler angebracht ist und welcher eine longitudinale Schallwelle im Koppelelement erzeugt. Diese wird an einer ersten Grenzfläche so reflektiert, dass eine transversale Schallwelle von der ersten Grenzfläche zu einer Auskoppelfläche reflektiert wird, wo sie aus dem Koppelelement in eine Rohrwand ausgekoppelt wird, auf welcher das Koppelement angebracht ist. Die beschriebene Modenkonversion im Koppelelement wird vorgenommen, um so genannte Lambwellen in der Rohrwand zu erzeugen, mit Hilfe derer der Durchfluss eines Messmediums durch das Rohr gemessen wird. Zusätzlich dazu zeigt die US 4,475,054 eine gekrümmte Grenzfläche zur Fokussierung der konvertierten Transversalwelle. Diese Wandler scheinen für die klassische Laufzeitdifferenzmessung mittels Clamp-On-Ultraschallwandlern ungeeignet, da neben den Transversalwellen auch Longitudinalwellen in die Rohrwand ausgekoppelt werden, welche die Messung empfindlich stören.

Die Aufgabe der Erfindung besteht darin, einen Ultraschallwandler und eine Verwendung eines Ultraschall-Durchflussmessgeräts mit einem solchen Ultraschallwandler vorzuschlagen, um möglichst viel Schallenergie in einer vorgegebenen Form in eine Rohrleitung einzukoppeln, um diese zur Messung des Durchflusses zu nutzen.

Die Aufgabe wird gelöst durch die Gegenstände der unabhängigen Ansprüche 1 und 11. Weiterbildungen und Ausgestaltungen der Erfindung finden sich in den Merkmalen der jeweils abhängigen Ansprüche wieder.

Neben möglichst viel Schallenergie in einer vorgegebenen Form in eine Rohrleitung einzukoppeln, um diese zur Messung des Durchflusses zu nutzen, wird bei der Verwendung eines erfindungsgemäßen Ultraschallwandlers zusätzlich möglichst wenig Schallenergie in anderen, die Messung störenden Formen in die Rohrleitung eingekoppelt. Der erfindungsgemäße Ultraschallwandler eignet sich für den Einsatz in Hochtemperatur-Clamp-On-Ultraschall-Durchflussmessgeräten.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt einen Querschnitt durch einen herkömmlichen Ultraschallwandler eines Clamp-On-Ultraschall-Durchflussmessgeräts,
- Fig. 2: zeigt einen Querschnitt durch einen erfindungsgemäßen Ultraschallwandler eines Clamp-On-Ultraschall-Durchflussmessgeräts,
- Fig. 3: zeigt den über einen Reflexionswinkel aufgetragenen Reflexionskoeffizienten für eine Longitudinal- und eine Transversalwelle,
- Fig. 4: zeigt einen Querschnitt durch einen erfindungsgemäßen Ultraschallwandler in einer weiteren Ausgestaltung,
- Fig. 5: zeigt ein Diagramm der Reflexionswinkel der Longitudinal- und Transversalwellen in Abhängigkeit vom Einfallswinkel.

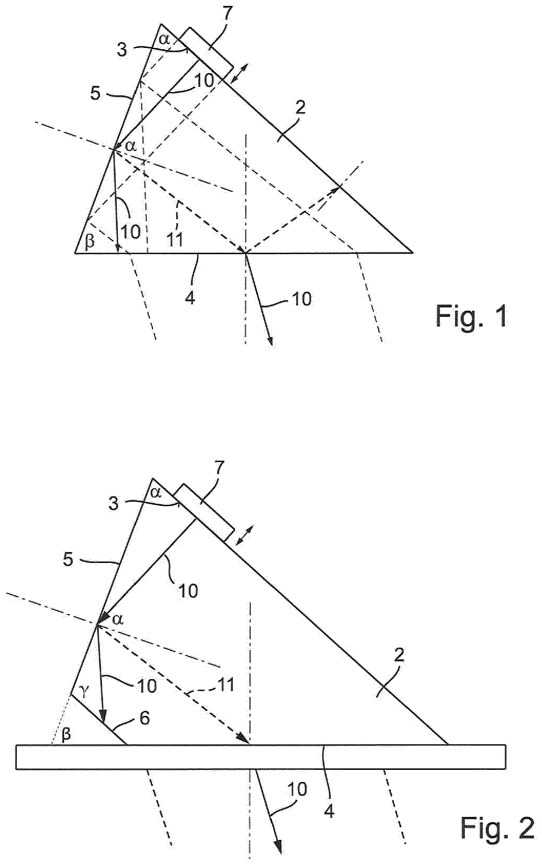

In Fig. 1 ist ein Ultraschallwandler 1 eines Clamp-On-Ultraschall-Durchflussmessgeräts des Stands der Technik dargestellt. Der Ultraschallwandler 1 weist ein Koppelelement 2 auf, welches geeignet ist zur Modenkonversion einer akustischen Longitudinalwelle zwischen einer Einkoppelfläche 3 und einer Auskoppelfläche 4 des Koppelelements durch Reflexion an einer ersten Grenzfläche 5 des Koppelelements 2 zu einem vorgegebenen Medium. Koppelelemente von Ultraschallwandlern für Ultraschall-Durchflussmessgeräte zur Transmission von mechanischen, insbesondere akustischen Wellen sind weithin bekannt. Hier findet zusätzlich zur Transmission der akustischen Wellen eine Modenkonversion statt. Ein elektromechanisches Wandlerelement 7 ist auf der Einkoppelfläche 3 des Koppelelements 2 angeordnet. Es erzeugt longitudinale Schallwellen 10, welche sich im Koppelelement 2 auf eine erste Grenzfläche 5 hin ausbreiten. Die gestrichelten Linien zeigen die Breite der Welle an. Die erste Grenzfläche 5 wird durch eine Oberfläche des Koppelelements 2 zu einem vorgegebenen Medium, wie beispielsweise die Luft in der Umgebung des Koppelements 2 gebildet.

An der ersten Grenzfläche 5 wird nun die Longitudinalwelle 10 reflektiert. In Abhängigkeit der Schallgeschwindigkeiten im Koppelelement 2 und in dem das an die besagte Oberfläche des Koppelements 2 angrenzenden Mediums und in Abhängigkeit des Einfallswinkels der Longitudinalwelle 10 auf die erste Grenzfläche 5 beziehungsweise des ersten Winkels α zwischen der Einkoppelfläche 3 und der ersten Grenzfläche 5, wird eine Transversalwelle 11 über eine Modenkonversion im Koppelelement 2 erzeugt. Die einfallende Longitudinalwelle 10 wird also anteilig in eine Longitudinalwelle 10 und eine Transversalwelle 11 an der ersten Grenzfläche 5 des Koppelelements 2 reflektiert. Deren Anteile hängen wiederum von den oben genannten Parametern ab. Ein Anteil der Schallenergie der einfallenden Longitudinalwelle 10 kann auch aus dem Koppelelement 2 austreten, in Form einer Schallwelle. Hier und im Nachfolgenden wird nicht weiter auf die Reflexionsanteile eingegangen, welche aus dem jeweils beschriebenen System austreten.

Die reflektierte Longitudinalwelle 10 und die reflektierte Transversalwelle 11 breiten sich unter verschiedenen Winkel aus. Sie treffen beide auf die Auskoppelfläche 4 des Koppelelements 2. Dort werden sie, wieder anteilig, aus dem Koppelelement 2 ausgekoppelt und in ein Messmedium oder in die Wand 9 eines Messrohrs 8 eingekoppelt, welches sie durchlaufen und anschließend in das Messmedium eingekoppelt werden. Ein Problem dieser Ultraschallwandler besteht darin, dass neben den zur Messung des Durchflusses des Messmediums durch das Messrohr 8 genutzten Anteile der Transversalwellen, welche wiederum an der Auskoppelfläche 4 oder der Messrohrwand 9 als Longitudinalwellen in das Messmedium reflektiert werden, auch die zur Auskoppelfläche reflektierten Longitudinalwellen an der Auskoppelfläche 4 oder der Messrohrwand 9 in das Messmedium reflektiert werden oder sich in der Messrohrwand 9 ausbreiten und als Störgröße während der Messung des Durchflusses des Mediums durch das Messrohr wahrgenommen werden.

Ein erfindungsgemäßer Ultraschallwandler für ein Ultraschall-Durchflussmessgerät, wie es in einer ersten Ausgestaltung in Fig. 2 gezeigt ist, weist eine Einkoppelfläche 3 und eine Auskoppelfläche 4 auf und ist geeignet zur Modenkonversion einer akustischen Longitudinalwelle zwischen der Einkoppelfläche 3 und der Auskoppelfläche 4 des Koppelelements 2 durch Reflexion an einer ersten Grenzfläche 5 des Koppelelements zu einem vorgegebenen Medium. Daneben weist es allerdings noch eine zusätzliche zweite Grenzfläche 6 zu einem vorgegebenen Medium auf, welche ungleich der Auskoppelfläche 4 des Koppelelements 2 ist.

Bei Verwendung des erfindungsgemäßen Ultraschallwandlers wird, wie bereits oben beschrieben, eine Longitudinalwelle 10 durch die Einkoppelfläche 3 in das Koppelelement 2 eingekoppelt, welche sich in Richtung der ersten Grenzfläche 5 ausbreitet und an dieser reflektiert wird. Die Anteile der reflektierten transversalen 11 und longitudinalen Wellen 10 hängen wiederum in erster Näherung von den oben genannten Parametern ab, die entsprechend eingestellt werden. So sind ein erster Winkel α zwischen der Einkoppelfläche 3 und der ersten Grenzfläche 5 und ein zweiter Winkel β zwischen der ersten Grenzfläche 5 und der Auskoppelfläche 4 so gewählt, dass ein Anteil an Transversalwellen 11 an der ersten Grenzfläche 5 zur Auskoppelfläche 5 reflektiert wird. Darüber hinaus ist ein dritter Winkel γ zwischen der ersten Grenzfläche 5 und der zweiten Grenzfläche 6 so gewählt, dass ein möglicher Anteil der zur zweiten Grenzfläche 6 reflektierten Longitudinalwellen 10, an der zweiten Grenzfläche 6 zurück ins Koppelelement 2 reflektiert wird. Ist die zweite Grenzfläche 6 zur ersten Grenzfläche 5 so angeordnet, dass ein Anteil an Longitudinalwellen 10 an der ersten Grenzfläche 5 zur zweiten Grenzfläche 6 reflektiert wird, so ist die zweite Grenzfläche 6 zur ersten Grenzfläche 5 eben auch so angeordnet, dass ein Anteil dieser Longitudinalwellen 10 an der zweiten Grenzfläche 6 zurück ins Koppelelement 2 reflektiert wird. An der zweiten Grenzfläche 6 werden dabei nicht ausschließlich Longitudinalwellen 10 zurück in das Koppelelement 2 reflektiert. In einer bevorzugten Ausgestaltung der Erfindung ist jedoch der Anteil einer vorgegebenen Wellenart, beispielsweise Longitudinalwellen, der zurückreflektierten Wellen groß im Vergleich zum Anteil der komplementären Wellenart, beispielsweise Transversalwellen.

Die zweite Grenzfläche 6 weist dabei einen Flächenschwerpunkt auf, welcher zu einer gedachten Ebene in Richtung einer Flächennormalen auf die Auskoppelfläche 4, welche Flächennormale durch den Flächenschwerpunkt der Auskoppelfläche verläuft, versetzt ist. Die gedachte Ebene ist im Raum derart orientiert, dass die Flächennormale der Auskoppelfläche 4 die Ebene senkrecht schneidet. Zusätzlich liegt der Flächenschwerpunkt der Auskoppelfläche in der besagten Ebene. Dadurch ist eindeutig festgelegt, dass die zweite Grenzfläche 6 nicht zur Auskoppelfläche 4 gehört. Da die Auskoppelfläche 4 im montierten Zustand des Ultraschallwandlers 1 beispielsweise eine Rohrleitung, oder im Fall eines montierten erfindungsgemäße Durchflussmessgeräts auch Messrohr genannt, berührt, um die Ultraschallwellen in das Messrohr einzukoppeln, berührt die zweite Grenzfläche 6 das Messrohr nicht, damit die an ihr reflektierten Ultraschallwellen eben nicht in das Messrohr eingekoppelt werden. In dem hier veranschaulichten Ausführungsbeispiel der Erfindung wird die zweite Grenzfläche 6 durch eine Ausnehmung des Koppelelements 2 aus Fig. 1 gebildet. Eine Ausnehmung dieser Art wird nachfolgend als Stand-Off bezeichnet.

Neben den Winkeln sind natürlich auch die genannten Flächen 3, 4, 5 und 6 entsprechend beschaffen, insbesondere von ihren Größen, aber auch von ihren Formen. Somit ergeben sich vorgegebene Lagen der Flächen zueinander. In einer Ausgestaltung der Erfindung treffen insbesondere die durch die Einkoppelfläche 3 eingekoppelten Longitudinalwellen 10 weder unreflektiert auf die zweite Grenzfläche 6 des Stand-Offs noch auf die Auskoppelfläche 4. Vielfach werden Auskoppelflächen auch als Ultraschallfenster bezeichnet.

Wie bereits erwähnt, sind die einzelnen Reflexionen in erster Näherung unabhängig von den Wellenlängen der akustischen Transversal- oder Longitudinalwellen. Daher ist ein Koppelelement auch unabhängig von einem Ultraschallwandler oder einem Ultraschall-Messsystem zu konzipieren. Soll ein System jedoch hochpräzise messen, können weitere Parameter wie z.B. die Amplitude, die Wellenlänge und/oder die Frequenz der in das Koppelelement eingekoppelten akustischen Welle, die akustischen Impedanzen der beteiligten Medien, wie die des elektromechanischen Wandlerelements, die des Koppelelements, die einer eventuell dazwischen platzierten Anpassungsschicht, die des das Koppelelement umgebende Mediums, die des Messrohrs und die des Messmediums oder andere Parameter bei der konstruktiven Ausgestaltung eines Koppelelements berücksichtigt werden. Bisher wurde lediglich der Weg einer akustischen Welle vom elektromechanischen Wandlerelement zum Messmedium hin beschrieben. Dem Fachmann geht jedoch eindeutig und unmittelbar aus dem genannten hervor, dass ein erfindungsgemäßer Ultraschallwandler sowohl als Sender als auch als Empfänger dienen kann.

Aus der Auskoppelfläche kann somit nicht nur eine akustische Welle aus dem Koppelelement ausgekoppelt werden, sie kann auch genutzt werden, um eine akustische Welle in das Koppelelement einzukoppeln. Gleiches gilt natürlich für die Einkoppelfläche und in ähnlicher Weise für die erste Grenzfläche. Selbstverständlich ist auch das elektromechanische Wandlerelement geeignet, eine akustische Welle in ein elektrisches Signal zu wandeln.

Bei der Verwendung eines erfindungsgemäßen Ultraschallwandlers als Empfänger könnten beispielsweise der erste Winkel zwischen der Einkoppelfläche und der ersten Grenzfläche und der zweite Winkel zwischen der ersten Grenzfläche und der Auskoppelfläche so gewählt sein und im montierten und damit ausgerichteten Zustand eines erfindungsgemäßen Ultraschall-Durchflussmessgeräts könnten beispielsweise akustische Wellen in das Koppelelement durch die Auskoppelfläche so eingekoppelt werden, dass ein Anteil der durch die Auskoppelfläche eingekoppelten akustischen Wellen als Transversalwellen zur ersten Grenzfläche reflektiert werden, und dass ein Anteil der zur ersten Grenzfläche reflektierten Transversalwellen an der ersten Grenzfläche als Longitudinalwellen zur Einkoppelfläche reflektiert werden.

Gemäß einer Weiterbildung des Koppelelements 2 sind der erste Winkel α zwischen der Einkoppelfläche 3 und der ersten Grenzfläche 5 und der dritte Winkel γ zwischen der ersten Grenzfläche 5 und der zweiten Grenzfläche 6 so gewählt, dass die Energie des Anteils der an der ersten Grenzfläche 5 zur zweiten Grenzfläche 6 reflektierten Transversalwellen 11 kleiner ist als die Energie des Anteils der an der ersten Grenzfläche 5 zur Auskoppelfläche 4 reflektierten Longitudinalwellen, und/oder die Winkel α und γ sind so gewählt, dass die Energie des Anteils der an der ersten Grenzfläche 5 zur zweiten Grenzfläche 6 reflektierten Longitudinalwellen 10 wesentlich größer ist als die Energie des Anteils der an der ersten Grenzfläche 5 zur Auskoppelfläche 4 reflektierten Longitudinalwellen.

Der Anteil an den von der ersten Grenzfläche zur zweiten Grenzfläche reflektierten Transversalwellen ist sehr klein. Hier in Fig. 2 verläuft die zweite Grenzfläche 6 näherungsweise parallel zu dem von der ersten Grenzfläche 5 zur Auskoppelfläche 4 reflektierten Anteil der Transversalwelle 11 und damit ist die Energie des Anteils der an der ersten Grenzfläche 5 zur zweiten Grenzfläche 6 reflektierten akustischen Transversalwellen quasi Null, da praktische keine Transversalwellen 11 von der ersten Grenzfläche 5 zur zweiten Grenzfläche 6 reflektiert werden. Die von der ersten Grenzfläche 5 reflektierten Longitudinalwellen 10 werden praktisch vollständig auf die zweite Grenzfläche 6 reflektiert und somit treffen näherungsweise keine der von der ersten Grenzfläche 5 reflektierten Longitudinalwellen 10 direkt auf die Auskoppelfläche 4. Entsprechend ist der Anteil der von der ersten Grenzfläche zur Auskoppelfläche reflektierten Transversalwellen hoch, hier näherungsweise 100%.

Gemäß einer weiteren Weiterbildung der Erfindung ist der Winkel α so gewählt, dass die Amplitude der an der ersten Grenzfläche 5 reflektierten Longitudinalwellen 10, also der zur zweiten Grenzfläche 6 reflektierten und/oder zur Auskoppelfläche 4 reflektierten Longitudinalwelle 10, mindestens 10dB, insbesondere mindestens 20 dB unter dem Niveau der Amplitude der an der ersten Grenzfläche 5 reflektierten Transversalwellen 11, also der durch Modenkonversion entstandenen und zur zweiten Grenzfläche 6 reflektierten und/oder zur Auskoppelfläche 4 reflektierten Transversalwellen 11. Der Winkel γ ist dann beispielsweise so gewählt, dass die Energie der an der zweiten Grenzfläche 6 zurück ins Koppelelement 2 reflektierten Longitudinalwelle minimal ist, d.h. dass ein Reflexionskoeffizient für diese Reflexion ein globales Minimum beim gewählten Winkel γ aufweist.

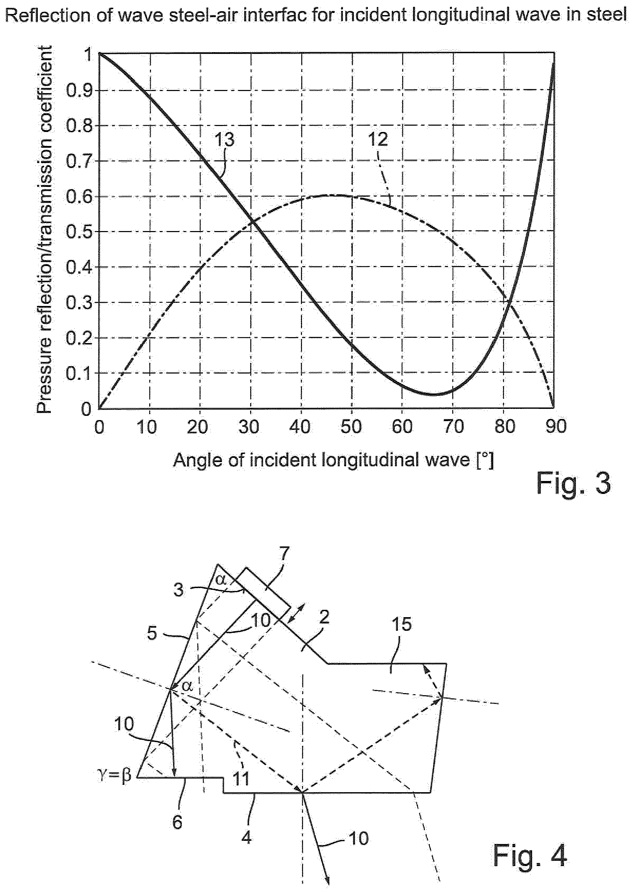

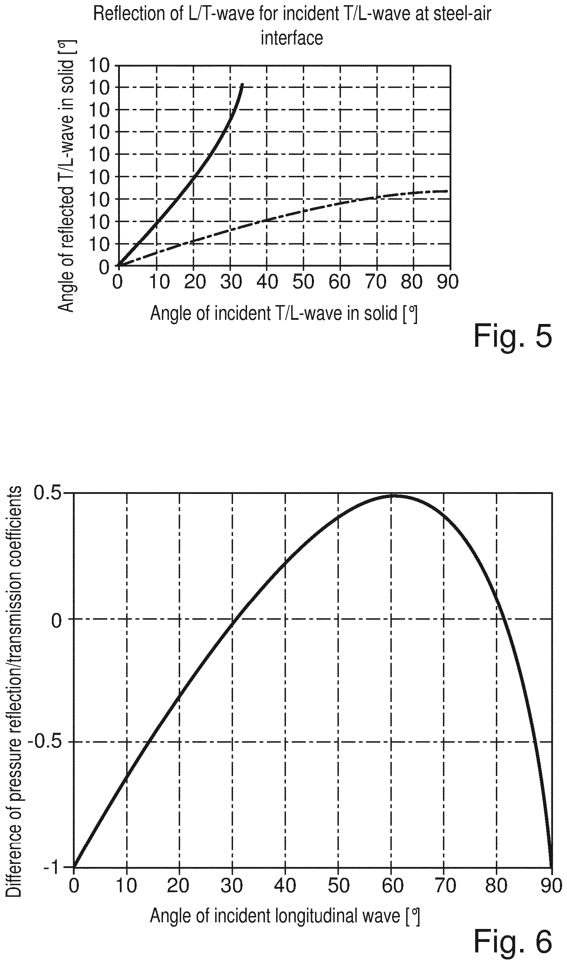

Für jede der beschriebenen Reflexionen kann ein Reflexionskoeffizient errechnet werden. In Fig. 3 sind die Reflexionskoeffizienten 12 und 13 für eine Transversal- und eine Longitudinalwelle über einen Einfallsswinkel aufgetragen. Der Einfallswinkel beträgt zwischen 0° und 90° und wird zwischen der einfallenden Welle, hier beispielsweise der Longitudinalwelle 10, und dem Normalenvektor auf die Grenzfläche, hier beispielsweise die erste Grenzfläche 5, gemessen. Wenn davon ausgegangen wird, dass die Longitudinalwelle 10 senkrecht zur Einkoppelfläche 3 in das Koppelelement 2 eingekoppelt wird und sich entsprechend senkrecht zur Einkoppelfläche 3 auf die erste Grenzfläche 5 ausbreitet, dann ist der Einfallswinkel gleich dem ersten Winkel α zwischen Einkoppelfläche 3 und erster Grenzfläche 5. Die Reflexionswinkel der an der ersten Grenzfläche 5 reflektierten Transversalwelle 11 und Longitudinalwelle 10 ergeben sich dann entsprechend aus den Formeln für die Reflexion. Fig. 5 zeigt ein Diagramm der Reflexionswinkel der Longitudinal- und Transversalwelle in Abhängigkeit vom Einfallswinkel der Longitudinal- respektive Transversalwelle für eine erste Grenzfläche gebildet aus einem Edelstahl als Werkstoff des Koppelelements und Luft als das das Koppelelement im Bereich der ersten Grenzfläche umgebende Medium. Die rechte, flacher verlaufende Kurve spiegelt die transversale (T) Reflexion einer einfallenden Longitudinalwelle (L) wieder, die linke, steiler ansteigende Kurve die longitudinale (L) Reflexion einer einfallenden Transversalwelle (T).

Auch das Diagramm in Fig. 3 bezieht sich auf diese Materialpaarung, wodurch andere Materialpaarungen hierdurch nicht ausgeschlossen werden sollen. Der Reflexionskoeffizient wird auch gelegentlich Reflexionsfaktor genannt. Er ist ein Maß für die reflektierte Amplitude der reflektierten Welle und damit ein Maß für die reflektierte Energie oder daraus abgeleitete Größen, wie beispielsweise die SchallIntensität. Im vorliegenden Beispiel wird die Longitudinalwelle bei einem Einfallswinkel von 0° vollständig als Longitudinalwelle 10 reflektiert. Die erste Grenzfläche 5 würde dann parallel zur Einkoppelfläche 3 verlaufen. Ein Wert für die Reflexion an der ersten Grenzfläche 5 für den Einfallswinkel 90° existiert logischerweise nicht, da die sich von der Einkoppelfläche 3 ausbreitende Longitudinalwelle nicht auf die erste Grenzfläche 5 treffen würde, da beide parallel zueinander verlaufen würden. Das gesagte gilt natürlich auch für die zweite Reflexion an der zweiten Grenzfläche 6 oder jeder anderen Reflexion. Die Figur soll hier nur beispielhaft anhand der ersten Reflexion erklärt werden.

Eine Transversalwelle 11 würde bei der gewählten ersten Grenzfläche 5 bei einem Winkel von 45° mit einer Amplitude von dem ca. 0,6-fachen der einfallenden Longitudinalwelle reflektiert werden. Dies stellt das globale Maximum der Kurve des über den Einfallswinkel aufgetragenen Reflexionskoeffizienten der reflektierten Transversalwelle 11 dar. Das globale Minimum der Kurve des über den Einfallswinkel aufgetragenen Reflexionskoeffizienten der reflektierten Longitudinalwelle 11 liegt hier bei ungefähr 66°. Dann wird lediglich das ca. 0,04-fache der Energie der auf die erste Grenzfläche 5 einfallenden Longitudinalwelle als Longitudinalwelle 10 reflektiert.

Die erste Grenzfläche 5 und der erste Winkel α sind nun gemäß einer Weiterbildung der Erfindung so beschaffen, dass eine erste Kurve 12 eines über dem ersten Winkel α aufgetragenen Reflexionsfaktors der als Transversalwelle 11 reflektierten Welle mit einem globalen Maximum existiert und entsprechend eine zweite Kurve eines über dem ersten Winkel α aufgetragenen Reflexionsfaktors der als Longitudinalwelle 10 reflektierten Welle mit einem globalen Minimum existiert, wobei die erste Kurve die zweite Kurve in zwei Punkten schneidet.

Gemäß der Weiterbildung der Erfindung ist der erste Winkel α zwischen der Einkoppelfläche und der ersten Grenzfläche zwischen 0° und 90° dann so gewählt, dass er zwischen den Winkelwerten der zwei Schnittpunkte der über den ersten Winkel aufgetragenen Kurven der jeweiligen Reflexionsfaktoren 12 und 13 der an der ersten Grenzfläche reflektierten Longitudinalwelle und der an der ersten Grenzfläche reflektierten Transversalwelle liegt.

Gemäß einer weiteren Weiterbildung der Erfindung ist der erste Winkel zwischen der Einkoppelfläche und der ersten Grenzfläche zwischen 0° und 90° so gewählt, dass er zwischen dem Winkelwert des globalen Minimums der über dem ersten Winkel aufgetragenen Kurve 13 des Reflexionsfaktors der an der ersten Grenzfläche reflektierten Longitudinalwelle und zwischen dem Winkelwert des globalen Maximums der über dem ersten Winkel aufgetragenen Kurve 12 des Reflexionsfaktors der an der ersten Grenzfläche reflektierten Transversalwelle liegt.

Diese Grenzen stellen für einen Fachmann lediglich Anhaltspunkte dar. Je nach Ausprägung der Kurven sind die Steigungen der Kurven um die beschriebenen Punkte sehr klein oder ein lokales Minimum oder Maximum befindet sich in unmittelbarer Nachbarschaft. Dann kann auch über diese Grenzen hinausgegangen werden, um einen erfindungsgemäßen Ultraschallwandler herzustellen.

In einer weiteren Weiterbildung der Erfindung wird vorgeschlagen, dass der erste Winkel zwischen der Einkoppelfläche und der ersten Grenzfläche zwischen 0° und 90° dem Winkelwert des globalen Maximums einer über dem ersten Winkel aufgetragenen Kurve aus der Differenz aus der über dem ersten Winkel aufgetragenen Kurve des Reflexionsfaktors der an der ersten Grenzfläche reflektierten Transversalwelle und der über dem ersten Winkel aufgetragenen Kurve des Reflexionsfaktors der an der ersten Grenzfläche reflektierten Longitudinalwelle entspricht.

Würde also die Differenz aus dem in Fig. 3 aufgetragenen Reflexionsfaktor für die reflektierte Transversalwelle und dem für die reflektierte Longitudinalwelle kontinuierlich zwischen den Grenzen 0° und 90° gebildet und die erhaltene Kurve wiederum über dem Einfallswinkel zwischen den Grenzen 0° und 90° aufgetragen, würde diese Kurve ein globales Maximum besitzen, hier bei einem Einfallswinkel von ungefähr 62°. Das Koppelelement 2 müsste dann entsprechend so konstruiert werden, dass der erste Winkel α zwischen der Einkoppelfläche 3 und der ersten Grenzfläche 5 ca. 62° beträgt. Ein Diagramm mit der über den Winkel α aufgetragener Differenz ist in Fig. 6 zu sehen.

In einer Ausführungsform ist der erste Winkel zwischen der Einkoppelfläche und der ersten Grenzfläche zwischen 0° und 90° so gewählt, dass er dem Winkelwert des globalen Maximums der über dem ersten Winkel aufgetragenen Kurve des Reflexionsfaktors der an der ersten Grenzfläche reflektierten Transversalwelle entspricht. Alternativ dazu ist der erste Winkel zwischen der Einkoppelfläche und der ersten Grenzfläche zwischen 0° und 90° so gewählt, dass er dem Winkelwert des globalen Minimums der über dem ersten Winkel aufgetragenen Kurve des Reflexionsfaktors der an der ersten Grenzfläche reflektierten Longitudinalwelle entspricht. Je nach Werkstoff des Koppelelements und Material des angrenzenden Mediums und je nach Einfallswinkel der akustischen Welle können auch das Maximum der einen und das Minimum der anderen Reflexion zusammenfallen.

Wie bereits erwähnt gelten ähnliche Beziehungen für die Reflexion an der zweiten Grenzfläche 6 oder an der Auskoppelfläche 4. Der zweite Winkel zwischen der ersten Grenzfläche 5 und der Auskoppelfläche 4 ist entsprechend gewählt.

Eine Weiterbildung der Erfindung schlägt vor, die Winkel γ bei vorgegebenem α so zu wählen, dass die Energie der an der zweiten Grenzfläche 5 zurück ins

Koppelelement 2 reflektierte Longitudinalwelle 10 minimal ist, d.h. dass die Winkel α und γ so gewählt sind, dass der Winkelwert von γ dem Winkelwert des globalen Minimums der über dem Winkel γ aufgetragenen Kurve des Reflexionsfaktors der an der zweiten Grenzfläche 5 reflektierten Longitudinalwelle 10 entspricht. Ist beispielsweise der Winkel α so gewählt, dass er dem Winkelwert des globalen Minimums der über dem ersten Winkel aufgetragenen Kurve des Reflexionsfaktors der an der ersten Grenzfläche 5 reflektierten Longitudinalwelle 10 entspricht, so ist auch der dritte Winkel γ so gewählt, dass der Einfallswinkel der an der ersten Grenzfläche 5 zur zweiten Grenzfläche 6 reflektierten Longitudinalwelle auf die zweite Grenzfläche 6 gleich α ist.

Verwendung findet ein erfindungsgemäßer Ultraschallwandler in der industriellen Prozessmesstechnik für Hochtemperaturanwendungen, also beispielsweise wenn das Messmedium eine Temperatur größer 150°C oder gar größer 200°C aufweist und die Außenseite der Rohrleitung, auf welcher das Koppelelement angebracht werden soll ein entsprechend ähnlich hohe Temperatur aufweist. Dafür ist ein Koppelelement dann vorteilhaft wenigstens anteilig aus einem Metall oder einer Metalllegierung, insbesondere aus Stahl, legiertem Stahl oder einem Edelstahl, hergestellt. Jedoch sind auch weitere Materialen denkbar, wie beispielsweise Kunststoffe oder Keramiken. Beispielsweise sollten Longitudinalwellen in das Messmedium, beispielsweise über ein Stahlrohr, in einem für die Laufzeitdifferenzmessung benötigten Winkel eingekoppelt werden, mit einem entsprechenden Einfallswinkel der Transversalwellen auf die Auskoppelfläche, beispielsweise zwischen 15° und 75°. Dieser Winkel lässt sich insbesondere über die transversale Schallgeschwindigkeit im Koppelelement einstellen, dessen Werkstoff somit entsprechend auszuwählen ist. Die Temperaturfestigkeit des Werkstoffs ist als eine weitere Randbedingung bei dessen Auswahl zu beachten.

In einem Ausführungsbeispiel liegt das Verhältnis von longitudinaler zu transversaler Schallgeschwindigkeit im Werkstoff des Koppelements zwischen 0,5 und 0,6, insbesondere zwischen 0,54 und 0,57, beispielsweise bei ungefähr 0,56.

Ein erfindungsgemäßer Ultraschallwandler umfasst mindestens ein Koppelelement, wobei ein elektromechanisches Wandlerelement 7 auf der Einkoppelfläche des Koppelelements angeordnet ist. Um das Koppelelement 2 kann der Ultraschallwandler ein Gehäuse aufweisen. Zwischen dem Gehäuse und dem Koppelelement ist dann ein das Koppelelement umgebendes Medium vorgesehen, beispielsweise ein bestimmtes Gas, eine bestimmte Flüssigkeit oder ein vorgegebener Kunststoff, oder das Gehäuse stellt das Material zur Bildung einer oder beider Grenzflächen bereit. Ein erfindungsgemäßer Ultraschallwandler ist geeignet zur Verwendung in einem Ultraschall-Durchflussmessgerät, insbesondere in einem Clamp-On- Ultraschall-Durchflussmessgerät. Bei dem elektromechanischen Wandlerelement 7, beispielsweise ein piezoelektrisches Element, handelt es sich gemäß einer Ausführungsform um einen so genannten Dickenschwinger. Das elektromechanische Wandlerelement 7 wird im Dickenmode betrieben, wodurch es mechanische, insbesondere akustische, Longitudinalwellen im Koppelelement erzeugt. In jeden Fall muss das elektromechanische Wandlerelement 7 geeignet sein, mechanische Wellen, insbesondere longitudinale Schallwellen, durch die Einkoppelfläche in das Koppelelement einzukoppeln.

Ein erfindungsgemäßes Clamp-On-Ultraschall-Durchflussmessgerät weist mindestens einen, zur Laufzeitdifferenzmessung mindestens zwei erfindungsgemäße Ultraschallwandler auf. Die zwei Ultraschallwandler eines so ausgestatteten Clamp-On-Ultraschall-Durchflussmessgeräts können auf einer Rohrleitung, dann Messrohr, in den gängigen Formen angeordnet werden. Dabei wird die jeweilige Auskoppelfläche mit der Rohrleitung in Verbindung gebracht und akustisch gekoppelt.

Dabei kann die Auskoppelfläche direkt auf die Außenfläche der Rohrleitung montiert werden, wodurch deren Werkstoffe eine Grenzfläche bilden, oder die Auskoppelfläche wird unter Zwischenlage einer Koppelmatte vorgegebenen Werkstoffs, also insbesondere mit bekannten Schallgeschwindigkeiten im Werkstoff sowohl für eine transversale als auch für eine longitudinale Schallwelle, auf die Rohrleitung montiert. Als weitere Möglichkeit wird zwischen Auskoppelfläche und Rohrleitung eine Koppelpaste oder ein Koppelfett angebracht. Koppelmatten bestehen üblicherweise aus einem Silikonmaterial. Hier könnten sie auch aus einem weichen Metall oder einer Metalllegierung bestehen, wie beispielsweise legierter Stahl oder Edelstahl.

Besteht das Koppelement aus demselben Material wie die Rohrleitung oder aus einem Werkstoff mit akustisch ähnlichen Eigenschaften, ist der Einfluss der Grenzfläche gebildet aus Auskoppelfläche und Messrohrwand zu vernachlässigen, da der Schall quasi ohne Reflexion durchgeleitet wird. Ansonsten müssten auch diese Grenzflächen bei der Auslegung des Koppelelements berücksichtigt werden, insbesondere die Grenzfläche gebildet aus Messrohrwand und Messmedium. Da sich in Flüssigkeiten und Gasen akustische Transversalwellen nicht oder nur sehr geringfügig ausbreiten und sie dadurch zur Messung des Durchflusses mittels des Laufzeitdifferenzprinzips nicht genutzt werden können, werden die Transversalwellen wieder als Longitudinalwellen in das Messmedium eingekoppelt. Eine Reflexion als Longitudinalwellen ist auch vorher möglich, beispielsweise beim Übertritt aus dem Koppelelement in eine Koppelmatte oder in das Messrohr. Weisen jedoch Messrohr und Koppelelement gleiche oder ähnliche akustische Eigenschaften auf, so werden die Transversalwellen erst beim Übertritt in das Medium als Longitudinalwellen reflektiert. Somit wird am wenigsten Energie verloren.

Der Werkstoff der Rohrleitung oder zumindest dessen akustische Eigenschaften, wie dessen akustische Impedanz oder Schallgeschwindigkeit, sind daher Vorteilhafterweise bekannt. Gleiches gilt für das Messmedium.

Fig. 4 zeigt nun eine weitere Ausführungsform eines erfindungsgemäßen Ultraschallwandlers. Der Stand-Off ist hier so ausgestaltet, dass die zweite Grenzfläche 6 in einer Ebenen parallel zur Ebene der Auskoppelfläche 4 liegt, versetzt in Richtung des Normalenvektors auf die Ebene der Auskoppelfläche 4. Die longitudinalen und/oder transversalen mechanischen Wellen, welche zurück in das Koppelelement reflektiert werden, werden in einen Bereich 15 mit hoher Dämpfung von longitudinalen und/oder transversalen mechanischen Wellen des Koppelelements reflektiert. Insbesondere werden in diesen schallabsorbierender Bereich 15 des Koppelelements 2 die von der zweiten Grenzfläche reflektierten Longitudinalwellen hinreflektiert und/oder die von der Auskoppelfläche reflektierten Longitudinal- und/oder Transversalwellen. Zusätzlich oder alternativ dazu werden die longitudinalen und/oder transversalen Wellen, welche zurück in das Koppelelement reflektiert werden, insbesondere also die an der zweiten Grenzfläche zurückreflektierten Longitudinalwellen, auf eine dritte Grenzfläche reflektiert, insbesondere näherungsweise senkrecht auf die dritte Grenzfläche reflektiert, wo sie ohne weitere Reflexion zurück in das Koppelelement 2 aus dem Koppelelement 2 austreten. Dann läge ein so genannter Totalübertritt vor. Auch an der zweiten Grenzfläche 6 kann bereits ein großer Anteil an auftreffenden Longitudinalwellen 10 aus dem Koppelelement 2 durch Reflexion nach Außen austreten.

Die in Fig. 4 dargestellte Konstruktion führt dazu, dass die zur zweiten Grenzfläche 6 reflektierten Longitudinalwellen 10 zu einem gewissen Anteil zur ersten Grenzfläche 5 zurückreflektiert werden und von dieser wiederum ein großer Anteil zur Einkoppelfläche 3 und dem elektromechanischen Wandlerelement 7 reflektiert wird. Diese Longitudinalwellen 10 können störend und somit nachteilig für die eigentliche Messung empfunden werden, jedoch könnte aus der Laufzeit dieser zur Einkoppelfläche 3 und damit zum elektromechanischen Wandlerelement 7 reflektierten akustischen Wellen, die Temperatur im Koppelelement 2 errechnet werden. Der Stand der Technik beschreibt die Berechnung der Temperatur bereits ausführlich.

Gemäß einer Ausgestaltung ist die zweite Grenzfläche gekrümmt. Dadurch lassen sich die an der zweiten Grenzfläche zurück in das Koppelelement reflektierten Wellen auf den schalldämpfenden Bereich des Koppelelements fokussieren, wodurch dieser kleiner ausgestaltet werden könnte. Gemäß einer weiteren Ausgestaltung ist die erste Grenzfläche gekrümmt, insbesondere so gekrümmt ist, dass die von der ersten Grenzfläche zur Auskoppelfläche reflektierten Transversalwellen zur Auskoppelfläche hin gebündelt werden. Natürlich kann auch die Auskoppelfläche selbst gekrümmt sein, um beispielsweise die Schallwellen im Messmedium in der Rohrleitung zu fokussieren oder um sie der Oberfläche der Rohrleitung anzupassen.

### Bezugszeichenliste

- 1: Ultraschallwandler
- 2: Koppelelement
- 3: Einkoppelfläche
- 4: Auskoppelfläche
- 5: Erste Grenzfläche
- 6: Zweite Grenzfläche
- 7: Elektromechanisches Wandlerelement
- 8: Messrohr
- 9: Messrohrwand
- 10: Longitudinalwelle
- 11: Transversalwelle
- 12: Kurve des Reflexionskoeffizienten der Transversalwelle
- 13: Kurve des Reflexionskoeffizienten der Longitudinalwelle
- 14: Schalldämpfender Bereich

## Patentansprüche

1. Ultraschallwandler für ein Ultraschall-Durchflussmessgerät nach dem Laufzeitdifferenzenprinzip, mit einem elektromechanischen Wandlerelement (7) und einem Koppelelement (2), wobei das Wandlerelement (7) auf einer Einkoppelfläche (3) eines Koppelelements (2) angeordnet ist, und wobei das Koppelelement (2) eingerichtet ist um auf eine Rohrleitung eines vorgegebenen Werkstoffs direkt oder unter Zwischenlage zumindest eines vorgegebenen Koppelstoffs zur Bestimmung des Durchflusses eines Messmediums durch die Rohrleitung angebracht zu werden, wobei das Koppelelement geeignet ist zur Modenkonversion einer akustischen Longitudinalwelle zwischen einer
Einkoppelfläche (3) und einer Auskoppelfläche (4) des Koppelelements (2) durch Reflexion an einer ersten Grenzfläche (5) des Koppelelements (2) zu einem vorgegebenen Medium,
**dadurch gekennzeichnet,**
**dass** das Koppelelement (2) eine zweite Grenzfläche (6) zu einem vorgegebenen Medium aufweist, wobei ein erster Winkel (α) zwischen der Einkoppelfläche (3) und der ersten Grenzfläche (5) und ein zweiter Winkel (ß) zwischen der ersten Grenzfläche (5) und der Auskoppelfläche (4) so gewählt sind,
**dass** ein Anteil einer auf die erste Grenzfläche auftreffende, vom Wandlerelement (7) erzeugte Longitudinalwelle (10) in Form einer Transversalwelle (11) zur Auskoppelfläche (4) reflektiert wird, und wobei der erste Winkel (α) zwischen der Einkoppelfläche (3) und der ersten Grenzfläche (5) und ein dritter Winkel (γ) zwischen der ersten Grenzfläche (5) und der zweiten Grenzfläche (6) so gewählt sind,
**dass** die auf die erste Grenzfläche auftreffende Longitudinalwelle (10) an der ersten Grenzfläche (5) praktisch vollständig zur zweiten Grenzfläche (6) in Form einer Longitudinalwelle reflektiert wird,
und **dass** ein Anteil der zur zweiten Grenzfläche (6)
reflektierten Longitudinalwellen an der zweiten Grenzfläche (6) zurück ins Koppelelement (2) reflektiert wird, wobei der Flächenschwerpunkt der zweiten Grenzfläche (6) zu einer Ebene in Richtung der Flächennormalen der Auskoppelfläche (4) durch den Flächenschwerpunkt der Auskoppelfläche (4) versetzt ist, auf welcher Ebene die Flächennormale der Auskoppelfläche (4) senkrecht steht und in welcher Ebene der Flächenschwerpunkt der Auskoppelfläche (4) liegt.

2. Ultraschallwandler für ein Ultraschall-Durchflussmessgerät nach Anspruch 1,
**dadurch gekennzeichnet,**
**dass** der erste Winkel (α) zwischen der Einkoppelfläche (3) und der ersten Grenzfläche (5) und der dritte Winkel (γ) zwischen der ersten Grenzfläche (5) und der zweiten Grenzfläche (6) so gewählt sind, dass die Energie des Anteils der an der ersten Grenzfläche (5) zur zweiten Grenzfläche (6) reflektierten Transversalwellen wesentlich kleiner ist als die Energie des Anteils der an der ersten Grenzfläche (5) zur Auskoppelfläche (4) reflektierten Transversalwellen.

3. Ultraschallwandler für ein Ultraschall-Durchflussmessgerät nach einem der Ansprüche 1 oder 2,
**dadurch gekennzeichnet,**
**dass** der dritte Winkel (γ) zwischen der ersten Grenzfläche (5) und der zweiten Grenzfläche (6) so gewählt ist, dass die zweite Grenzfläche (6) parallel zu dem von der ersten Grenzfläche (5) zur Auskoppelfläche (4) reflektierten Anteil der Transversalwelle verläuft.

4. Ultraschallwandler für ein Ultraschall-Durchflussmessgerät nach einem der Ansprüche 1 bis 3,
**dadurch gekennzeichnet,**
**dass** der erste Winkel (α) zwischen der Einkoppelfläche (3) und der ersten Grenzfläche (5) so gewählt ist, dass er zwischen den Winkelwerten zweier Schnittpunkte einer über den ersten Winkel aufgetragenen Kurven der jeweiligen Reflexionsfaktoren, welche bezogen sind auf das Koppelelement gegenüber Luft der Umgebung, der an der ersten Grenzfläche (5) reflektierten Longitudinalwelle und der an der ersten Grenzfläche (5) reflektierten Transversalwelle liegt.

5. Ultraschallwandler für ein Ultraschall-Durchflussmessgerät nach einem der Ansprüche 1 bis 4,
**dadurch gekennzeichnet,**
**dass** der erste Winkel (α) zwischen der Einkoppelfläche (3) und der ersten Grenzfläche (5) so gewählt ist, dass er zwischen dem Winkelwert des globalen Minimums der über dem ersten Winkel aufgetragenen Kurve des Reflexionsfaktors, welcher bezogen ist auf das Koppelelement gegenüber Luft der Umgebung, der an der ersten Grenzfläche (5) reflektierten Longitudinalwelle und dem Winkelwert des globalen Maximums der über dem ersten Winkel aufgetragenen Kurve des Reflexionsfaktors der an der ersten Grenzfläche (5) reflektierten Transversalwelle liegt.

6. Ultraschallwandler für ein Ultraschall-Durchflussmessgerät nach Anspruch 4 oder 5,
**dadurch gekennzeichnet, dass**
der erste Winkel (α) zwischen der Einkoppelfläche (3) und der ersten Grenzfläche (5) dem Winkelwert des globalen Maximums einer über dem ersten Winkel aufgetragenen Kurve aus der Differenz aus der über dem ersten Winkel aufgetragenen Kurve des Reflexionsfaktors,
welche bezogen sind auf das Koppelelement gegenüber Luft der Umgebung, der an der ersten Grenzfläche (5) reflektierten Transversalwelle und der über dem ersten Winkel aufgetragenen Kurve des Reflexionsfaktors der an der ersten Grenzfläche (5) reflektierten Longitudinalwelle entspricht.

7. Ultraschallwandler für ein Ultraschall-Durchflussmessgerät nach einem der Ansprüche 1 bis 4,
**dadurch gekennzeichnet,**
**dass** der erste Winkel (α) zwischen der Einkoppelfläche (3) und der ersten Grenzfläche (5) so gewählt ist, dass er dem Winkelwert des globalen Maximums der über dem ersten Winkel aufgetragenen Kurve des Reflexionsfaktors der an der ersten Grenzfläche (5) reflektierten Transversalwelle entspricht.

8. Ultraschallwandlers für ein Ultraschall-Durchflussmessgerät nach einem der Ansprüche 1 bis 4,
**dadurch gekennzeichnet,**
**dass** der erste Winkel (α) zwischen der Einkoppelfläche (3) und der ersten Grenzfläche (5) so gewählt ist, dass er dem Winkelwert des globalen Minimums der über dem ersten Winkel aufgetragenen Kurve des Reflexionsfaktors, welche bezogen sind auf das Koppelelement gegenüber Luft der Umgebung, der an der ersten Grenzfläche (5) reflektierten Longitudinalwelle entspricht.

9. Ultraschallwandlers für ein Ultraschall-Durchflussmessgerät nach einem der Ansprüche 1 bis 8,
**dadurch gekennzeichnet,**
**dass** das Koppelelement (2) aus wenigstens anteilig aus einem Metall oder einer Metalllegierung besteht.

10. Ultraschallwandlers für ein Ultraschall-Durchflussmessgerät nach einem der Ansprüche 1 bis 9,
**dadurch gekennzeichnet,**
**dass** die erste Grenzfläche (5) gekrümmt ist und/oder dass die zweite Grenzfläche (6) gekrümmt ist.

11. Verwendung eines Ultraschall-Durchflussmessgeräts mit einem Ultraschallwandler nach einem der Ansprüche 1 bis 10,
**dadurch gekennzeichnet,**
**dass** das Koppelelement (2) auf eine Rohrleitung eines vorgegebenen Werkstoffs direkt oder unter Zwischenlage zumindest eines vorgegebenen Koppelstoffs zur Bestimmung des Durchflusses eines Messmediums durch die Rohrleitung angebracht wird.

12. Verwendung eines Ultraschall-Durchflussmessgeräts mit einem Ultraschallwandler nach einem der Ansprüche 1 bis 10,
**dadurch gekennzeichnet,**
**dass** das Koppelelement (2) aus einem Werkstoff mit ähnlichen akustischen Eigenschaften wie die Rohrleitung hergestellt wird.

13. Verwendung eines Ultraschall-Durchflussmessgeräts mit einem Ultraschallwandler nach einem der Ansprüche 1 bis 10,
**dadurch gekennzeichnet, dass** das Messmedium eine Temperatur größer 150°C aufweist.

## Claims

1. Ultrasonic transducer for an ultrasonic flowmeter according to the principle of the transit time difference, with an electromechanical transducer element (7) and a coupling element (2), wherein the transducer element (7) is arranged on a coupling surface (3) of a coupling element (2),
and wherein the coupling element (2) is designed to be mounted on a pipe of a predefined material directly, or with the insertion at least of a predefined coupling material, to determine the flow of a medium through the pipe, wherein the coupling element is suitable for the mode conversion of an acoustic longitudinal wave between a coupling surface (3) and a decoupling surface (4) of the coupling element (2) by reflection at a first boundary surface (5) of the coupling element (2) to a predefined medium,
**characterized in that**
the coupling element (2) has a second boundary surface (6) to a predefined medium,
wherein a first angle (σ) between the coupling surface (3) and the first boundary surface (5) and a second angle (β) between the first boundary surface (5) and the decoupling surface (4) is chosen in such a way that
a part of a longitudinal wave (10) falling onto the first boundary surface, said wave being generated by the transducer element (7), is reflected in the form of a transversal wave (11) towards the decoupling surface (4), and wherein the first angle (σ) between the coupling surface (3) and the first boundary surface (5) and a third angle (γ) between the first boundary surface (5) and the second boundary surface (6) are selected in such a way that
the longitudinal wave (10) falling onto the first boundary surface is reflected at the first boundary surface (5) practically completely towards the second boundary surface (6) in the form of a longitudinal wave,
and **in that** a part of the longitudinal waves (10) reflected towards the second boundary surface (6) is reflected at the second boundary surface (6) back into the coupling element (2), wherein the centroid of the second boundary surface (6) is offset in relation to a plane in the direction of the surface normal of the decoupling surface (4) by the centroid of the decoupling surface (4), wherein the normal of the decoupling surface (4) is perpendicular on said plane and the centroid of the decoupling surface (4) is located on said plane.

2. Ultrasonic transducer for an ultrasonic flowmeter as claimed in Claim 1,
**characterized in that**
the first angle (σ) between the coupling surface (3) and the first boundary surface (5) and the third angle (γ) between the first boundary surface (5) and the second boundary surface (6) are selected in such a way that the energy of the proportion of the transversal waves reflected at the first boundary surface (5) towards the second boundary surface (6) is significantly smaller than the energy of the proportion of the transversal waves reflected at the first boundary surface (5) towards the decoupling surface (4).

3. Ultrasonic transducer for an ultrasonic flowmeter as claimed in one of the Claims 1 or 2,
**characterized in that**
the third angle (γ) between the first boundary surface (5) and the second boundary surface (6) is selected in such a way that the second boundary surface (6) is parallel to the part of the transversal wave reflected by the first boundary surface (5) towards the decoupling surface (4).

4. Ultrasonic transducer for an ultrasonic flowmeter as claimed in one of the Claims 1 to 3,
**characterized in that**
the first angle (σ) between the coupling surface (3) and the first boundary surface (5) is selected in such a way that it is situated between the angle values of two points of intersection of curves of the reflection factors plotted over the first angle - said factors referring to the coupling element in relation to the air of the environment - of the longitudinal wave reflected at the first boundary surface (5) and the transversal wave reflected at the first boundary surface (5).

5. Ultrasonic transducer for an ultrasonic flowmeter as claimed in one of the Claims 1 to 4,
**characterized in that**
the first angle (σ) between the coupling surface (3) and the first boundary surface (5) is selected in such a way that it is situated between the angle value of the global minimum of the curve of the reflection factor plotted over the first angle - said factor referring to the coupling element in relation to the air of the environment - of the longitudinal wave reflected at the first boundary surface (5), and the angle value of the global maximum of the curve of the reflection factor, plotted over the first angle, of the transversal wave reflected at the first boundary surface (5).

6. Ultrasonic transducer for an ultrasonic flowmeter as claimed in Claim 4 or 5,
**characterized in that**
the first angle (σ) between the coupling surface (3) and the first boundary surface (5) corresponds to the angle value of the global maximum of a curve plotted over the first angle from the difference of the curve of the reflection factor plotted over the first angle - which refers to the coupling element in relation to the air of the environment - of the transversal wave reflected at the first boundary surface (5), and the curve of the reflection factor, plotted over the first angle, of the longitudinal wave reflected at the first boundary surface (5).

7. Ultrasonic transducer for an ultrasonic flowmeter as claimed in one of the Claims 1 to 4,
**characterized in that**
the first angle (σ) between the coupling surface (3) and the first boundary surface (5) is selected in such a way that it corresponds to the angle value of the global maximum of the curve of the reflection factor, plotted over the first angle, of the transversal wave reflected at the first boundary surface (5).

8. Ultrasonic transducer for an ultrasonic flowmeter as claimed in one of the Claims 1 to 4,
**characterized in that**
the first angle (σ) between the coupling surface (3) and the first boundary surface (5) is selected in such a way that it corresponds to the angle value of the global minimum of the curve of the reflection factor plotted over the first angle - which refers to the coupling element in relation to the air of the environment - of the longitudinal wave reflected at the first boundary surface (5).

9. Ultrasonic transducer for an ultrasonic flowmeter as claimed in one of the Claims 1 to 8,
**characterized in that**
the coupling element (2) is made at least in part from a metal or a metal alloy.

10. Ultrasonic transducer for an ultrasonic flowmeter as claimed in one of the Claims 1 to 9,
**characterized in that**
the first boundary surface (5) is curved and/or **in that** the second boundary surface (6) is curved.

11. Use of an ultrasonic flowmeter with an ultrasonic transducer as claimed in one of the Claims 1 to 10,
**characterized in that**
the coupling element (2) is mounted on a pipe of a predefined material directly or with the insertion of at least a predefined coupling material to determine the flow of a medium through the pipe.

12. Use of an ultrasonic flowmeter with an ultrasonic transducer as claimed in one of the Claims 1 to 10,
**characterized in that**
the coupling element (2) is made from a material with acoustic properties that are similar to the pipe.

13. Use of an ultrasonic flowmeter with an ultrasonic transducer as claimed in one of the Claims 1 to 10,
**characterized in that**
the medium has a temperature greater than 150 °C.

## Revendications

1. Convertisseur à ultrasons pour un débitmètre à ultrasons d'après le principe de la différence des temps de transit, avec un élément convertisseur électromécanique (7) et un élément de couplage (2), l'élément convertisseur (7) étant disposé sur une surface de couplage (3) d'un élément de couplage (2),
et pour lequel l'élément de couplage (2) est conçu pour être monté sur une conduite d'un matériau prédéfini directement ou avec l'interposition d'au moins un matériau de couplage prédéfini en vue de la détermination du débit d'un produit mesuré à travers la conduite, l'élément de couplage étant approprié pour la conversion de mode d'une onde longitudinale acoustique entre une surface de couplage (3) et une surface de découplage (4) de l'élément de couplage (2) par réflexion à une première surface de séparation (5) de l'élément de couplage (2) vers un produit prédéfini,
**caractérisé**
**en ce que** l'élément de couplage (2) présente une deuxième surface de séparation (6) par rapport à un produit prédéfini,
un premier angle (σ) entre la surface de couplage (3) et la première surface de séparation (5) et un deuxième angle (β) entre la première surface de séparation (5) et la surface de découplage (4) étant choisis de telle sorte qu'une partie d'une onde longitudinale (10) frappant la première surface de séparation (3), laquelle onde est générée par l'élément convertisseur (7) et est réfléchie sous la forme d'une onde transversale (11) en direction de la surface de découplage (4), et le premier angle (σ) entre la surface de couplage (3) et la première surface de séparation (5) et un troisième angle (γ) entre la première surface de séparation (5) et la deuxième surface de séparation (6) sont choisis de telle sorte
que l'onde longitudinale (10) frappant la première surface de séparation est réfléchie à la première surface de séparation (5) pratiquement complètement en direction de la deuxième surface de séparation (6) sous la forme d'une onde longitudinale,
et **en ce qu'**une partie des ondes longitudinales (10) réfléchies en direction de la deuxième surface de séparation (6) est réfléchie au niveau de la deuxième surface de séparation (6) de retour dans l'élément de couplage (2), le centre de gravité de la deuxième surface de séparation (6) étant décalé d'un plan dans la direction de la normale de la surface de découplage (4) par le centre de gravité de la surface de découplage (4), plan auquel la normale de la surface de découplage (4) est perpendiculaire et plan dans lequel se trouve le centre de gravité de la surface de découplage (4).

2. Convertisseur à ultrasons pour un débitmètre à ultrasons selon la revendication 1,
**caractérisé**
**en ce que** le premier angle (σ) entre la surface de couplage (3) et la première surface de séparation (5) et le troisième angle (γ) entre la première surface de séparation (5) et la deuxième surface de séparation (6) sont choisis de telle sorte que l'énergie de la proportion des ondes transversales réfléchies à la première surface de séparation (5) vers la deuxième surface de séparation (6) est sensiblement plus faible que l'énergie de la proportion des ondes transversales réfléchies à la première surface de séparation (5) vers la surface de couplage (4).

3. Convertisseur à ultrasons pour un débitmètre à ultrasons selon l'une des revendications 1 ou 2,
**caractérisé**
**en ce que** le troisième angle (γ) entre la première surface de séparation (5) et la deuxième surface de séparation (6) est choisi de telle sorte que la deuxième surface de séparation (6) est parallèle à la partie de l'onde transversale réfléchie par la première surface de séparation (5) vers la surface de découplage (4).

4. Convertisseur à ultrasons pour un débitmètre à ultrasons selon l'une des revendications 1 à 3,
**caractérisé**
**en ce que** le premier angle (σ) entre la surface de couplage (3) et la première surface de séparation (5) est choisi de telle sorte à ce qu'il se situe entre les valeurs angulaires de deux points d'intersection des courbes des facteurs de réflexion respectifs tracées sur le premier angle - lesquels facteurs se réfèrent à l'élément de couplage par rapport à l'air environnant - de l'onde longitudinale réfléchie à la première surface de séparation (5) et de l'onde transversale réfléchie à la première surface de séparation (5).

5. Convertisseur à ultrasons pour un débitmètre à ultrasons selon l'une des revendications 1 à 4,
**caractérisé**
**en ce que** le premier angle (σ) entre la surface de couplage (3) et la première surface de séparation (5) est choisi de telle sorte qu'il se situe entre la valeur angulaire du minimum global de la courbe du facteur de réflexion tracée sur le premier angle - lequel facteur se réfère à l'élément de couplage par rapport à l'air environnant - de l'onde longitudinale réfléchie à la première surface de séparation (5), et la valeur angulaire du maximum global de la courbe du facteur de réflexion tracée sur le premier angle, de l'onde transversale réfléchie à la première surface de séparation (5).

6. Convertisseur à ultrasons pour un débitmètre à ultrasons selon la revendication 4 ou 5,
**caractérisé**
**en ce que** le premier angle (σ) entre la surface de couplage (3) et la première surface de séparation (5) correspond à la valeur angulaire du maximum global d'une courbe tracée sur le premier angle à partir de la différence de la courbe du facteur de réflexion tracée sur le premier angle - lequel se réfère à l'élément de couplage par rapport à l'air environnant - de l'onde transversale réfléchie à la première surface de séparation (5), et de d'une courbe du facteur de réflexion tracée sur le premier angle, de l'onde longitudinale réfléchie à la première surface de séparation (5).

7. Convertisseur à ultrasons pour un débitmètre à ultrasons selon l'une des revendications 1 à 4,
**caractérisé**
**en ce que** le premier angle (σ) entre la surface de couplage (3) et la première surface de séparation (5) est choisi de manière à correspondre à la valeur angulaire du maximum global de la courbe du facteur de réflexion tracée sur le premier angle, de l'onde transversale réfléchie à la première surface de séparation (5).

8. Convertisseur à ultrasons pour un débitmètre à ultrasons selon l'une des revendications 1 à 4,
**caractérisé**
**en ce que** le premier angle (σ) entre la surface de couplage (3) et la première surface de séparation (5) est choisi de telle sorte à correspondre à la valeur angulaire du minimum global de la courbe du coefficient de réflexion tracée sur le premier angle - lequel se réfère à l'élément de couplage par rapport à l'air environnant - de l'onde longitudinale réfléchie à la première surface de séparation (5).

9. Convertisseur à ultrasons pour un débitmètre à ultrasons selon l'une des revendications 1 à 8,
**caractérisé**
**en ce que** l'élément de couplage (2) est constitué au moins en partie d'un métal ou d'un alliage métallique.

10. Convertisseur à ultrasons pour un débitmètre à ultrasons selon l'une des revendications 1 à 9,
**caractérisé**
**en ce que** la première surface de séparation (5) est incurvée et/ou en ce que la deuxième surface de séparation (6) est incurvée.

11. Utilisation d'un débitmètre à ultrasons avec un convertisseur à ultrasons selon l'une des revendications 1 à 10,
**caractérisé**
**en ce que** l'élément de couplage (2) est monté sur une conduite d'un matériau prédéfini directement ou avec l'interposition d'au moins un matériau de couplage prédéfini, en vue de la détermination du débit d'un produit mesuré à travers la conduite.

12. Utilisation d'un débitmètre à ultrasons avec un convertisseur à ultrasons selon l'une des revendications 1 à 10,
**caractérisé**
**en ce que** l'élément de couplage (2) est constitué d'un matériau présentant des propriétés acoustiques similaires à celles de la conduite.

13. Utilisation d'un débitmètre à ultrasons avec un convertisseur à ultrasons selon l'une des revendications 1 à 10,
**caractérisé**
**en ce que** le produit mesuré présente une température supérieure à 150 °C.
